Europäisches Patentamt

European Patent Office

Office européen des brevets

(11) Publication number: **0 460 218 A1**

# (12) EUROPEAN PATENT APPLICATION
## published in accordance with Art. 158(3) EPC

(21) Application number: 91900318.6

(22) Date of filing: 14.12.90

(86) International application number:
PCT/JP90/01637

(87) International publication number:
WO 91/09234 (27.06.91 91/14)

(51) Int. Cl.5: **F16D 65/21**

(30) Priority: 19.12.89 JP 327373/89

(43) Date of publication of application:
**11.12.91 Bulletin 91/50**

(84) Designated Contracting States:
**CH DE FR GB LI**

(71) Applicant: FANUC LTD.
**3580, Shibokusa Aza-Komanba Oshinomura
Minamitsuru-gun, Yamanashi 401-05(JP)**

(72) Inventor: UCHIDA, Hiroyuki Fanuc Mansion
Harimomi 7-107
3539-1, Shibokusa Oshino-mura
Minamitsuru-gun Yamanashi 401-05(JP)
Inventor: TAKEDA, Hidemi Fanuc Dai-3
Vira-karamatsu
3527-1, Shibokusa Oshino-mura
Minamitsuru-gun Yamanashi 401-05(JP)

(74) Representative: Brunner, Michael John et al
GILL JENNINGS & EVERY 53-64 Chancery
Lane
London WC2A 1HN(GB)

(54) CONSTRUCTION OF ARMATURE OF ELECTROMAGNETIC BRAKE.

(57) An armature (26) of a frictional disc type electromagnetic brake should be designed to be thick because it constitutes part of a magnetic circuit, with the result that press molding of it becomes difficult. Therefore, the armature (26) is formed by superposing a plurality of press-moldable thin discs one upon another. For this purpose, pin-shaped projections (36) are formed on a thin disc (30a) and another thin disc (30b) formed therein with through-holes (32) is coupled onto the thin disc (30a), through-holes (42) are formed in all of the thin discs (40a, 40b) which are connected to one another by use of pin member (46), caulking portions (52) are provided in every thin discs (50a) which are connected to one another through caulking by press, or every thin discs are bonded and fixed to one another by use of a heat-hardening adhesive.

Fig. 1

## TECHNICAL FIELD

The present invention relates to a construction of an armature of an electromagnetic brake. Therefore, it is possible to use it as the armature of a friction plate type electromagnetic brake for motor use.

## BACKGROUND ART

The armature of a friction plate type electromagnetic brake performs the function of restraining or releasing the friction plates by receiving electromagnetic attraction forces based on conduction to the winding bundle when actuating or releasing the friction plate type brake. Therefore, the armature is constructed to have a thickness above that required from the viewpoint of mechanical strength in view of the construction of the portion of the electrical circuit.

This friction plate type electromagnetic brake in general is comprised by a combination of tubular or disk shaped members. Therefore the majority of the products are formed by press-forming, which is advantageous cost-wise. Making the armature as well by press-forming contributes to lower costs, so this has been done in the past.

However, in an electromagnetic brake with a large braking force, the thickness of the armature often exceeds 3 mm and the press formation becomes less easy. That is, the press machine must become larger in volume and extremely tough in type. Further, the wear on the shape becomes faster, so capital costs pile up. Also, the product which is formed sometimes suffers from warping or drooping of the edges, resulting in a decline in the flatness and other facets of precision and also requiring post treatment, thus leading to higher costs.

## DISCLOSURE OF THE INVENTION

Therefore, the present invention has as its object the provision of a construction of an armature which is of large thickness and which can be manufactured easily and at low cost.

In view of the above-mentioned object, the present invention provides a construction of an armature wherein pin-shaped projections are press-formed on one sheet, through holes are provided to engage with said pin-shaped projections in other sheets, the sheets are laminated so that the pin-shaped projections engage with said through holes, and the tips of the said pin-shaped projections are pressed to deform so as to join the said sheets.

Further, it provides a construction of an armature wherein a plurality of sheets provided with through holes at identical positions are laminated, pin members are inserted into the through holes, and the tips thereof are pressed to deform so as to join the sheets with each other.

Still further, it provides a construction of an armature wherein a plurality of sheets, provided with caulking portions at identical positions by press-forming so that concavities are formed in the surface of one side and convexities are formed at the surface of the other side, are laminated so that the said convexities of one adjoining sheet engage with the said concavities of another sheet, and the caulking portions are caulked by a press so as to join the sheets to each other.

Still further, it provides a construction of an armature wherein a plurality of sheets are joined with an adhesive.

In all of the above means, it is possible to select for the sheets serving as the constituent elements a thickness which enables easy press-forming and therefore an armature of a desired thickness is constructed by just joining them by pin-shaped projections, separate pin members, caulking portions, or adhesives.

## BRIEF EXPLANATION OF THE DRAWINGS

Figure 1 is a sectional view showing the construction of an armature according to the present invention and is a section along the arrow line II-II of Fig. 2;

Fig. 2 is a front view of the armature shown in Fig. 1;

Fig. 3 is an enlarged view of a portion A of Fig. 1;

Fig. 4 shows a second embodiment according to the present invention and is an enlarged view corresponding to Fig. 3;

Fig. 5 is a front view showing a third embodiment of an armature according to the present invention;

Fig. 6 is an enlarged sectional view along arrow line VI-VI of Fig. 5; and

Fig. 7 is a sectional view of a friction plate type electromagnetic brake.

## BEST MODE FOR CARRYING OUT THE INVENTION

Below, a more detailed explanation will be given of the present invention based on the embodiments shown in the attached drawings.

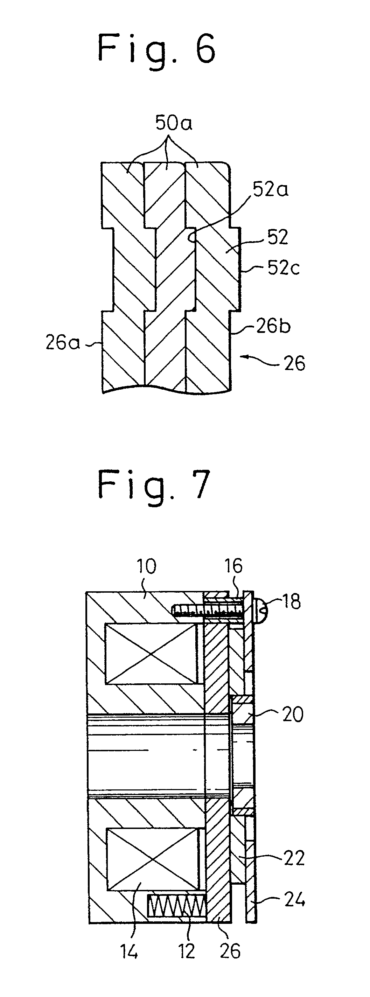

First, referring to Fig. 7, a winding bundle 14 is provided inside a brake core 10 to enable generation of electromagnetic force. An end plate 24 is affixed to the brake core 10 through a spacer 16 by a screw 18. The end plate 24 and the brake core 10 have arranged between them a friction plate 22 and an armature 26 slidable in the longitudinal direction (longitudinal direction of the spacer 16). The friction plate 22 is slidably engaged with a hub 20. The armature 26 is slidably engaged with the spacer 16. Reference numeral 12 shows a coil spring which usually biases the armature 26 in the above-mentioned longitudinal direction. When no current is passed to the winding bundle 14, the friction plate 22 is pressed to the end plate 24 by the armature 26 and fixed there and is fixed to a shaft, not shown, through the hub 20.

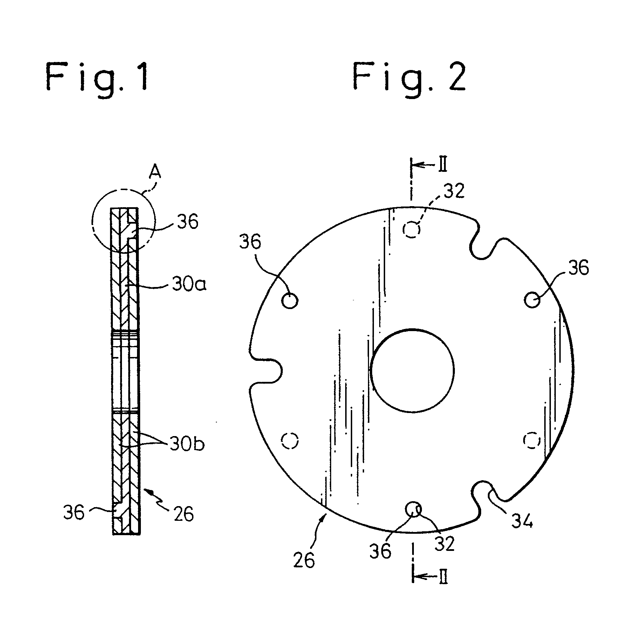

Below, an explanation will be made of the construction of the above-mentioned armature 26. Referring to Fig. 1 to Fig. 3, the armature 26 of the first embodiment is comprised of a center sheet 30a and two sheets 30b at the sides. The center sheet 30a has pin-shaped projections 36 formed at three locations at an equiangular arrangement on the surface of the right side shown in Fig. 2 and has pin-shaped projections formed at a total of three locations at the center positions of the above-mentioned pin-shaped projections 36 on the surface of the left side as well. The other sheets 30b have through holes 32 formed at positions corresponding to the above-mentioned sets of three pin-shaped projections. The sheets are laminated so that the pin-shaped projections 36 are inserted into these through holes 32 and engaged with them, then the tip portions 36' of the pin projections shown by the broken line are pressed to deform and construct the armature 26.

The above-mentioned pin-shaped projections 36 and through holes 32 may be formed simultaneously with the cutting of the inner and outer circumferences when press forming the sheets 30a and 30b. In this embodiment, further, three projections 36 are provided at both the sides of the center sheet 30a, but the sheets may be joined by providing two each as well. Reference numeral 34 shows a concavity for engagement with the spacer 16 shown in Fig. 7, which can be easily simultaneously formed during the above press-forming.

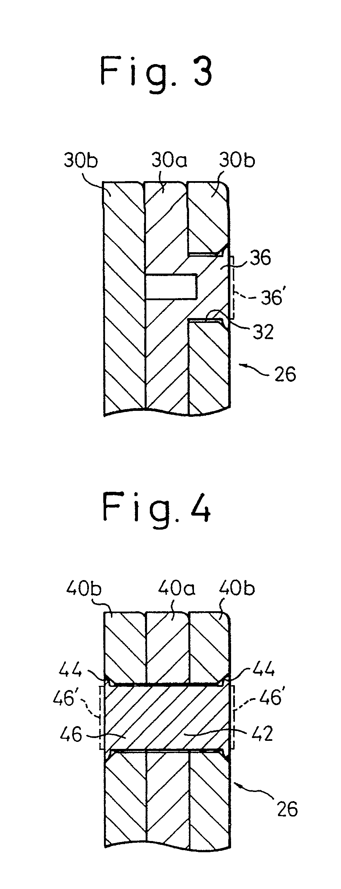

Figure 4 is a partial sectional view of a second embodiment according to the present invention. It differs from the first embodiment in that instead of the pin-shaped projections 36 of the center sheet 30a in the first embodiment, use is made of separate pin members 46. That is, when the armature 26 is comprised of three sheets, both the center sheet 40a and the two outer sheets 40b are made sheets of basically the same shape provided with through holes 42 for insertion of the pin members 46. Further, after the pin members 46 are inserted, the two ends 46' are pressed and deformed, so it is preferable that the peripheries 44 of the through holes 42 be formed as spot facings in shape.

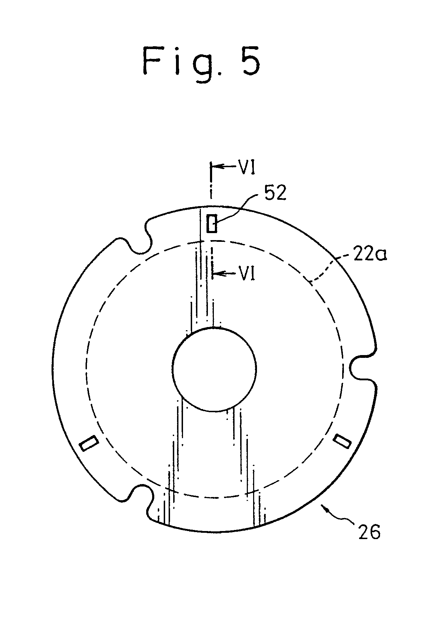

Figure 5 and Fig. 6 show a third embodiment according to the present invention. In this embodiment, the sheets 50a, which are the constituent elements of the armature 26, have caulking portions 52 formed at three locations in an equiangular arrangement in the peripheral regions. The caulking portions 52 form convexities 52c on one side and concavities 52a at the other side, the mutually adjoining concavities 52a and convexities 52c fitting together. These sheets 50a are laminated, then the caulking portions 52 are caulked by a press to fix the entire assembly. One surface 26a of the armature 26 is made to face the brake core 10 (Fig. 7) and the other surface 26b the friction plate 22. The caulking portion 52 has to be formed so that it is positioned at the outside of the outer circumference 22a of the friction plate 22 so that the friction plate 22 does not come into contact with the three caulking portions 52.

As a technique for laminating the easily press-formable sheet on each other, in addition to the above, there is the method of coating an adhesive on the entire surfaces and fixing the sheets together. Another method is to use a commercially available steel plate provided with a thermosetting adhesive.

As clear from the above explanation, according to the present invention, it is possible to construct a thick armature by laminating easily press-formable sheets, so it becomes possible to provide an armature construction whereby the press equipment costs are reduced and whereby the overall costs become low.

LIST OF REFERENCE SYMBOLS

| | |
|---|---|
| 10 | brake core |
| 22 | friction plate |
| 26 | armature |
| 30a, 30b | sheet of armature construction |
| 32 | through hole provided in sheet |
| 36 | pin-shaped projection |

**Claims**

1. A construction of an armature of an electromagnetic brake, said construction of an armature of an electromagnetic brake characterized in that pin-shaped projections are press-formed on one sheet, through holes are provided to engage with said pin-shaped projections in other sheets, the sheets are laminated so that the pin-shaped projections engage with said through holes, and the tips of the said pin-shaped projections are pressed to deform so as to join the said sheets.

2. A construction of an armature of an electromagnetic brake as set forth in claim 1, wherein one center sheet among the said plurality of sheets is provided with at least two pin-shaped projections which stand out facing opposite directions from each other with respect to the plane of the sheet.

3. A construction of an armature of an electromagnetic brake, said construction of an armature of an electromagnetic brake characterized in that a plurality of sheets provided with through holes at identical positions are laminated, pin members are inserted into the through holes, and the tips thereof are pressed to deform so as to join the sheets with each other.

4. A construction of an armature of an electromagnetic brake, said construction of an armature of an electromagnetic brake characterized in that a plurality of sheets, provided with caulking portions at identical positions by press-forming so that concavities are formed in the surface of one side and convexities are formed at the surface of the other side, are laminated so that the said convexities of one adjoining sheet engage with the said concavities of another sheet, and the caulking portions are caulked by a press so as to join the sheets to each other.

5. A construction of an armature of an electromagnetic brake, said construction of an armature of an electromagnetic brake characterized in that a plurality of sheets of the same shape are coated on each surface with an adhesive and are joined with each other.

6. A construction of an armature of an electromagnetic brake as set forth in claim 5, wherein said sheets are steel plate with thermosetting adhesives.

# Fig. 1

# Fig. 2

# Fig. 3

# Fig. 4

# Fig. 5

# Fig. 6

# Fig. 7

8

# INTERNATIONAL SEARCH REPORT

International Application No PCT/JP90/01637

**I. CLASSIFICATION OF SUBJECT MATTER** (if several classification symbols apply, indicate all) [6]

According to International Patent Classification (IPC) or to both National Classification and IPC

Int. Cl$^5$  F16D65/21

**II. FIELDS SEARCHED**

| Minimum Documentation Searched [7] | |
|---|---|
| Classification System · | Classification Symbols |
| IPC | F16D65/21 |

Documentation Searched other than Minimum Documentation
to the Extent that such Documents are Included in the Fields Searched [8]

Jitsuyo Shinan Koho       1926 - 1984
Kokai Jitsuyo Shinan Koho   1971 - 1984

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| Y | JP, Y2, 1-15932 (Ogura Clutch Co., Ltd.), May 11, 1989 (11. 05. 89), (Family: none) | 1, 2 |
| Y | (ditto) | 3 |
| Y | (ditto) | 4 |
| Y | (ditto) | 5, 6 |

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| February 4, 1991 (04. 02. 91) | February 18, 1991 (18. 02. 91) |

| International Searching Authority | Signature of Authorized Officer |
|---|---|
| Japanese Patent Office | |